# EUROPEAN PATENT APPLICATION

(11) **EP 1 537 816 A1**
(43) Date of publication of application: **08.06.2005**
(21) Application number: 04252680.6
(22) Date of filing: 07.05.2004
(51) Int. Cl.: A47L 9/24, F16L 27/08

(54) **Extension pipe having a joint for vacuum cleaner**

(30) Priority: 02.12.2003 KR 2003086625
(71) Applicant: Samsung Gwangju Electronics Co., Ltd., Gwangju-city (KR)
(72) Inventor: Kim, Jung-hoon, Gwangju-city (KR)
(74) Representative: Wilson Gunn M'Caw

(57) **Abstract**

An extension pipe for a vacuum cleaner, for providing a sealed channel between a cleaner body and a suction brush and having a joint that includes a bendable part in accordance with a user's desire, comprising a first extension pipe (110), a second extension pipe (120) pivotably connected to the first extension pipe (110), and a resilient locking member (130) disposed adjacent the first extension pipe (110) to be resiliently deformed by sliding movement thereof and having a locking protrusion (132) to selectively engage one of a plurality of locking recesses (123,124) formed in the first extension pipe (110), thereby selectively restraining pivotal movement of the first and the second extension pipes (110,120) relative to each other. A joint cover (122) connected to one side of the second extension pipe (120) may pivot together with the second extension pipe (120) to seal the connection joint. In a second embodiment, a release handle (234) is connected to a pair of locking members (231), each having a locking protrusion (232) to selectively engage one of a plurality of locking recesses (223,224).

## Description

### BACKGROUND OF THE INVENTION

### Field of the Invention

The present invention relates generally to a vacuum cleaner, and more particularly, to an extension pipe for a vacuum cleaner that has a bendable connection part to enable convenient cleaning of the spaces under pieces of furniture, such as a bed or sofa.

### Description of the Background Art

Generally, a vacuum cleaner draws in dirt and dust from a surface to be cleaned together with ambient air using a vacuum suction force generated by a vacuum suction motor provided in a cleaner body. The vacuum cleaner has a channel connecting the cleaner body and a suction brush having an air in flow port sealed to the channel.

The channel may take various forms according to the kind of vacuum cleaner being operated, and in general, it may include a flexible hose for connecting to the cleaner body, a handle and an extension pipe for connecting from the handle to the suction brush. The extension pipe is expandable and contractible, that is, it is adjustable in length, and in general, a plurality of extension pipes may be provided for modular assembly and disassembly, depending on the length of the extension pipe desired.

However, a suction brush connected to a conventional extension pipe has a disadvantage in that in order to clean spaces under a bed, sofa, or other furniture, a user has to bend over to reach a low posture to enable the suction brush to be brought into close contact with the surface to be cleaned because the angle between the extension pipe and the suction brush is usually not adjustable. Also, even in the cases in which the angle between the extension pipe and the suction brush is adjustable, the user still has to bend his/her back to push the suction brush into the spaces under the furniture. An improvement to overcome these problems is thus demanded.

### SUMMARY OF THE INVENTION

The present invention has been developed in order to overcome the above-described problems. An aspect of the present invention is to provide an extension pipe providing a joint for a vacuum cleaner which enables bending of the extension pipe by means of a simple button manipulation and without requiring a user to bend his/her back, and provides for a convenient cleaning operation.

The above aspect is achieved by providing an extension pipe arrangement having a connection joint for a vacuum cleaner comprising a first extension pipe, a second extension pipe pivotably connected to the first extension pipe, a resilient locking member to selectively restrain pivotal movement of the first and the second extension pipes relative to each other, and a joint cover for sealing the connection joint of the first and the second extension pipes.

The first extension pipe may be connected to a cleaner body, and the second extension pipe may be connected to a suction brush for cleaning a surface.

The resilient locking member may be disposed in the first extension pipe to be resiliently and temporarily deformed by the sliding movement of the locking member and preferably has a locking protrusion selectively engaging a plurality of locking recesses formed in the second extension pipe to restrain pivotal movement in relative positions between the first and the second extension pipes.

The joint cover is preferably connected to the second extension pipe to seal the connection portion between the first and the second extension pipes, and may pivots with the movement of the second extension pipe.

The first extension pipe comprises a tubular body, a cylindrical joint formed at one end of the body for providing a connection to the second extension pipe, a locking receiver formed within the cylindrical joint to receive the resilient locking member, and a locking recess formed on an outer circumference of the cylindrical joint for receiving a part of the resilient locking member when it is positioned for insertion into the recess. In a preferred embodiment, the recess penetrates through the wall of the outer circumference of the cylindrical joint to permit the part to be inserted into the penetrating recess and through the wall.

According to a first embodiment of the present invention, the resilient locking member comprises a locking member body shaped to correspond in form with the locking receiver and the part of the resilient locking member further comprising a locking protrusion formed on an outer circumference of the resilient locking member to permit selective insertion into and engagement with the plurality of locking recesses, a sliding plate connected to the locking member body, and an operation handle connected to the sliding plate.

The second extension pipe is connected to the joint cover to support an opposite side of the cylindrical joint, and the joint part of the second extension pipe has at least one slot element allowing the operation handle to be exposed to the outside through a wall of the joint housing, while permitting reciprocal movement of the operation handle along the slot element. The slot element preferably comprises a first slot extending along a line parallel with the first extension pipe when the first and the second extension pipes are connected to each other so as to extend in a straight line relative to each other, and a second slot element preferably extending along a line parallel with the first extension pipe when the first and the second extension pipes are in a bent relationship relative to each other.

The locking recesses may comprise a first locking recess for securing the first and the second extension pipes in a first position, in which the first and the second extension pipes may extend in a straight line relative to each other, and a second locking recess for securing the first and the second extension pipes in a second position, in which the first and the second extension pipes may be bent with a predetermined angle between each other. The first and the second locking recesses each may have a chamfered surface adjacent an inner surface of the locking receiver facing the locking protrusion.

An angle may be provided in which the orientation between the first and the second extension pipes ranges essentially from 40° to 50°, and is preferably about 45°. The angle of the bend is determined according to the locations of the first and the second locking recesses.

According to a second embodiment of the present invention, the resilient locking member may be temporarily resiliently deformed by the sliding movement of the release handle, which covers a part of outer circumference of the first extension pipe. The locking member has a locking protrusion for selective engagement in one of the plurality of locking recesses formed in the second extension pipe to restrict the pivotal movement of the first and the second extension pipes. The resilient locking member may comprise a locking member body having a shape to correspond in form to the locking member receiver and the locking protrusion protruding therefrom, and a sliding plate having one end connected to the locking member body and the other end connected to the release handle formed in the locking member body to provide for reciprocal movement depending on the position of the release handle. A pair of resilient locking members may be symmetrically disposed at one each of both sides of the cylindrical joint.

The release handle has a guide hole formed at a location corresponding to the guide protrusion, and reciprocates in a lengthwise direction of the first extension pipe.

### BRIEF DESCRIPTION OF THE DRAWING FIGURES

FIG. 1 is a perspective view showing in detail an extension pipe joint for a vacuum cleaner according to a first embodiment of the present invention;

FIG. 2 is an exploded perspective view of the extension pipe joint shown in FIG. 1;

FIG. 3 is a partial sectional side view showing the extension pipe joint of the first embodiment of the present invention when the extension pipes extend in a straight line;

FIG. 4 is a partial sectional side view showing the extension pipe joint of the first embodiment of the present invention when the extension pipes are angled relative to each other;

FIG. 5 is a perspective detail view showing an extension pipe joint for a vacuum cleaner according to a second embodiment of the present invention;

FIG. 6 is an exploded perspective view of the extension pipe joint shown in FIG. 5;

FIG. 7 is a partial sectional side view showing the extension pipe joint of the second embodiment of the present invention when the extension pipes extend in a straight line; and

FIG. 8 is a partial sectional side view showing the extension pipe joint of the second embodiment of the present invention when the extension pipes are angled relative to each other.

### DETAILED DESCRIPTION OF THE PREFERRED EMBODIMENTS

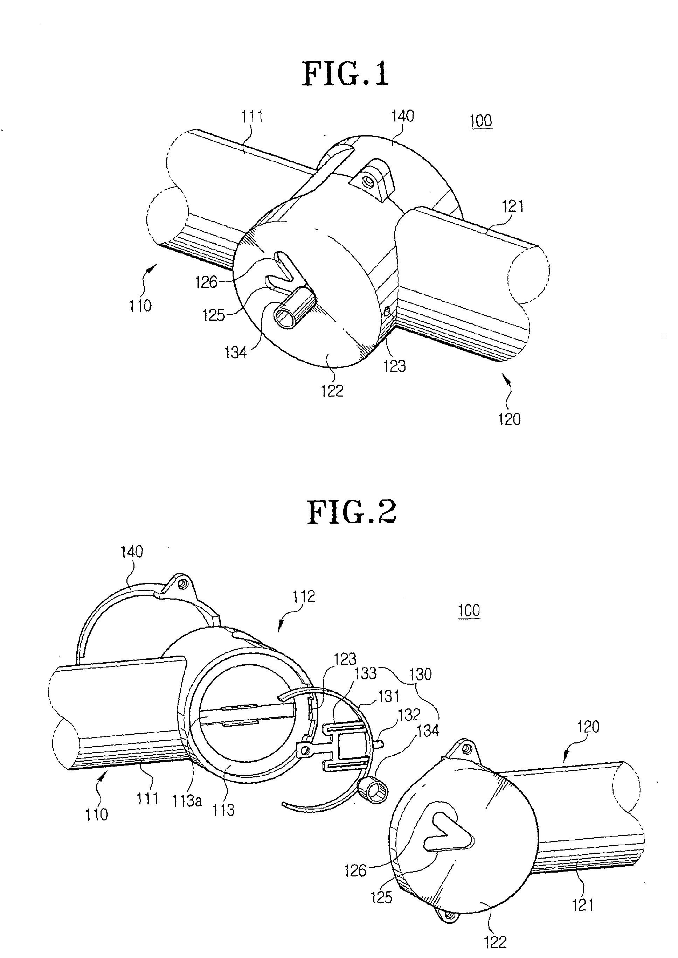

Hereinafter, an extension pipe arrangement 100 for a vacuum cleaner according to a first embodiment of the present invention will be described in detail with reference to FIGS. 1 to 4.

An extension pipe arrangement 100 having a joint for a vacuum cleaner according to the first embodiment of the present invention comprises a first extension pipe 110, a second extension pipe 120, a resilient locking member 130 and a joint housing 140.

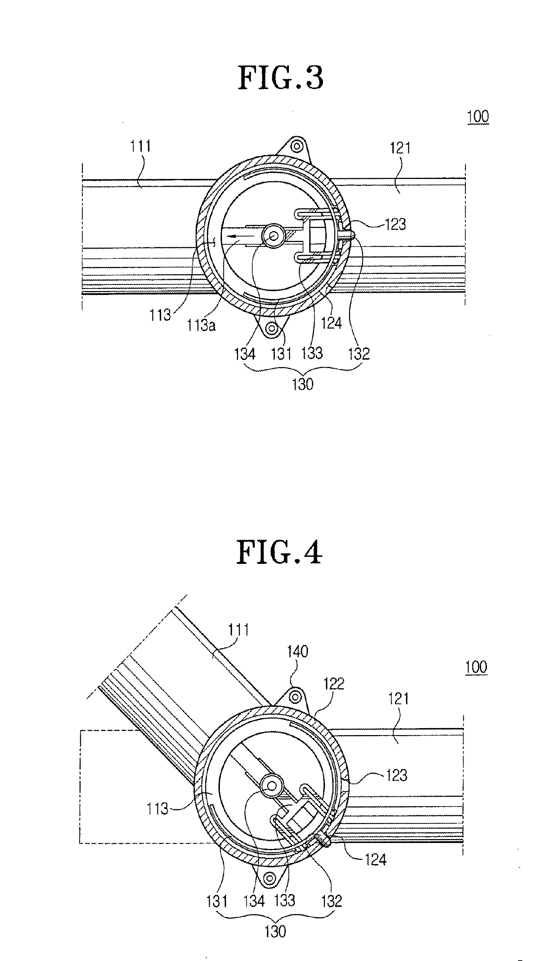

The first extension pipe 110 comprises a tubular body 111, a cylindrical joint 112 being connected to one side of the body 111 and also being connected to the second extension pipe 120, a locking member receiver 113 formed within the cylindrical joint 112 and configured and arranged to receive the resilient locking member 130, and a recess 123 formed on an inner circumference of the locking member receiver 113 for engagement with a locking protrusion 132, as will be explained below. In a preferred embodiment, the recess 123 is formed to extend from the inner circumference to the outer circumference of the locking member receiver 113 so as to extend through and penetrate a wall of the cylindrical joint 112, as shown in FIGS. 3 and 4.

The tubular body 111 is connected to a cleaner body (not shown), and is shaped in tubular form to allow air, in which dirt is entrained, to enter into the cleaner body therethrough.

The cylindrical joint 112 is pivotably connected to the second extension pipe 120 and acts as a center portion about which the first and the second extension pipes 110 and 120 can be pivoted. The cylindrical joint 112 is arranged with the locking member receiver 113, defined in an inner circumference thereof, which is configured to receive the resilient locking member 130. A guide recess 113a extends across a central portion of the locking member receiver 113 for guiding reciprocal movement of one or more sliding plates 133, which will be described below.

The second extension pipe 120 comprises a preferably tubular second extension pipe body 121 connected to a suction brush (not shown) through which air, in which dirt is entrained, can be drawn in from a surface to be cleaned, and a joint enclosure 122 for engaging connection with the joint housing 140 around the joint 112. Preferably, the joint enclosure 122 may be formed by a molding process to decrease costs of production, and may be, formed integrally with the second extension pipe 120. The joint enclosure 122 is provided with first and second locking recesses 123, 124, respectively, to selectively engage and lock the resilient locking member 130 at different positions and first and second slots 125 and 126 penetrating through the wall of the joint enclosure 122 to allow an operation handle 134 to extend therethrough to the outside for manipulation by user, when desired. In a preferred embodiment, as shown, the recesses 123, 124 extend through the wall of the locking member receiver 113, as shown in FIGS. 3 and 4.

The resilient locking member 130 comprises a semicircular locking member body 131, a locking protrusion 132 protruding radially outwardly from the locking member body 131, the sliding plate 133 being connected to and extending radially inwardly from the locking member body 131, and the operation handle 134 connected to the sliding plate 133.

The locking member body 131 may be a semi-circular plate spring having a suitable resilience, and the locking protrusion 132 may protrude from an outer circumference of the locking member body. In one example, the locking member body 131 may be made of a metal material to prevent damage to the mechanism from repeated operation thereof.

The sliding plate 133 can be slid reciprocally along the guide recess 113a, thereby permitting the locking member 131 to move reciprocally within the locking member receiver 113. Accordingly, by moving the locking member body 131 in relation to the reciprocal movement of the operation handle 134 connected to the sliding plate 133, the locking protrusion 132 is selectively locked into the first or the second locking recesses 123, 124, respectively. An angle of bend orients between the first and the second extension pipe bodies 111 and 121, the position of which depends on the locations of the first and the second locking recesses 123 and 124. The angle of the bend may range substantially from 40° to 50°, and more preferably, is about 45°.

Hereinafter, the operation of the extension pipe for the vacuum cleaner according to the first embodiment of the present invention will be described with reference to FIGS. 3 and 4.

FIG. 3 shows a normally extended condition of the extension pipe arrangement 100 according to the first embodiment, in which the first and the second extension pipe bodies 111 and 121 are maintained relative to each other in a straight line. As shown in FIG. 3, the locking protrusion 132 is inserted into the first locking recess 123 so that the first and the second extension pipe bodies 111 and 121 do not pivot about the joint 112.

When a user transposes the operation handle 134 in the direction of the arrow, as shown in FIG. 3, when it is desirable to clean spaces under a bed or other furniture, the locking protrusion 132 disengages from the first locking recess 123, so that the first and the second extension pipe bodies 111 and 121 are released from the locked condition shown in Fig. 3. At this time, the pipe extensions 111, 121 can pivot about the joint 112, and the user can bend the first extension pipe body 111 with respect to the second extension pipe body 121.

The user transposes the operation handle 134 until the locking protrusion 132 disengages from the first locking recess 123. Once disengaged, the pivoting operation of the second extension pipe body 121 does not require a user's further manipulation of the operation handle 134. That is, the locking protrusion 132 slides in contact with the adjacent inner circumference of the joint part 122 due to the resilient recovering force of the locking member body 131 as the joint part 122 rotates. The pivoting is free to proceed until the locking protrusion 132 reaches the second locking recess 124.

Since the locking protrusion 132 has a rounded end, as shown in FIG. 4, it is brought into a point contact with the inner circumference of the joint part 122, and thus is enabled to slide without generating much friction. Also, the first and the second locking recesses 123, 124 have chamfered surfaces 128 formed on the inner surface portion facing the locking protrusion 132 to thereby facilitate insertion of the locking protrusion 132 into the locking recesses 123, 124, as shown in FIGS. 3 and 4.

Accordingly, when a user withdraws the operation handle 134 in the direction of the arrow, as shown in FIG. 3, to disengage the locking protrusion 132 from the first locking recess 123, and pivots the second extension pipe body 121, the locking protrusion 132 slidably moves along the inner circumference of the joint part 122 due to the resilient recovering force of the locking member body 131. When the locking protrusion 132 reaches the second locking recess 124, the resilient recovering force of the locking body 131 forces the locking protrusion 132 into engagement with the second locking recess 124 so that the first and the second extension pipe bodies 111 and 121 are secured in a position in which they are angled relative to each other, as shown in FIG. 4.

When the cleaning operation of the space under the bed or other furniture is completed, the first and the second extension pipe bodies 111 and 121 can be reoriented in a straight direction relative to each other by performing the above described procedure in a reverse order. That is, the user disengages the locking protrusion 132 from the second locking recess 124 by withdrawing the operation handle 134 and then pivoting the second extension pipe body 121 until the locking protrusion 132 reaches and engages the first locking recess 123. This can be done as the user lifts the second extension pipe body 121, connected to the suction brush (not shown) by gripping the first extension pipe body 111, so as to cause the second extension pipe body 121 to pivot due to its own weight, and thereby the first and the second extension pipe bodies 111 and 121 reach a desired straight configuration. The first slot 125 of the joint part 122 guides the reciprocal movement of the operation handle 134 when the first and the second extension pipe bodies 111 and 121 are secured in a straight orientation, and the second slot 126 guides the reciprocal movement of the operation handle 134 when the first and the second extension pipe bodies 111 and 121 are at an angle relative to each other. The angle between the first and the second slots 125 and 126 corresponds to the angle of pivot desired between the first and the second extension pipe bodies 111 and 121, so the user can use the extension pipe more conveniently for cleaning spaces under furniture.

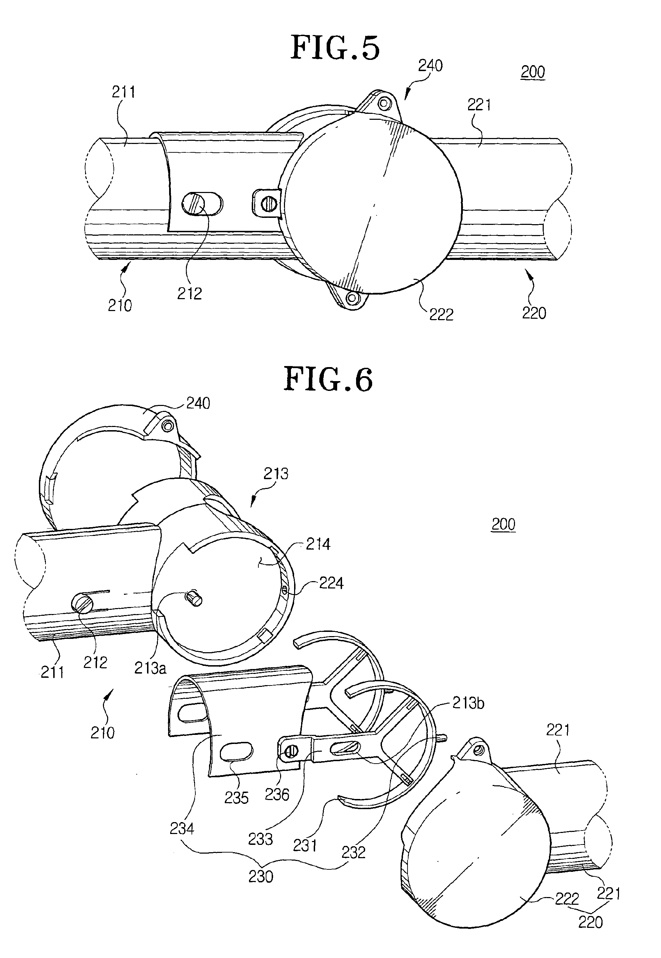

Referring now to FIGS. 5 to 8, an extension pipe having a joint connection for a vacuum cleaner according to a second embodiment of the present invention will be described below.

As shown in FIG. 5, an extension pipe arrangement 200 having a joint connection according to the second embodiment comprises a first extension pipe 210, a second extension pipe 220, a resilient locking member 230 (FIG. 6), and a joint connection housing 240.

FIG. 6 is an exploded perspective view showing the extension pipe arrangement 200 for the vacuum cleaner according to the second embodiment of the present invention.

The first extension pipe 210 comprises a tubular body 211 having a sliding protrusion 212 extending outwardly from the surface of tubular body 211, a cylindrical joint 213 formed at one end of the body 211 and being connected to the second extension pipe 220, locking receivers 214 symmetrically formed on opposite sides of the joint 213 configured to receive the resilient locking members 230, and a locking recess 224 formed in an inner circumference of each locking receiver 214 and extending through the wall of the cylindrical joint 213, into which the locking protrusions 232 may penetrate and with which they engage.

The second extension pipe 220 comprises a second extension pipe body 221 connected at one end to a suction brush (not shown), through which air and entrained dirt and dust are drawn in from a surface to be cleaned, and a joint part 222 for engaging with the joint housing 240. The joint part 222 may be fabricated by molding to reduce expenses and may be preferably integrally formed as a unitary member with the second extension pipe 220, as shown. The joint part 222 is provided with a first set of first and second locking recesses 223, 224, respectively, for selectively locking the locking protrusion 232 at different angle positions. It should be noted that two pairs of locking recesses 223, 224 are provided in the symmetrical locking receivers 214, to accommodate the two separate locking protrusions 232, as will be explained below.

The resilient locking member 230 comprises a locking body 231, a longitudinal sliding plate 233, and a release handle 234.

Each locking body 231 is shaped to correspond in shape to the locking receivers 214 and includes the locking protrusion 232 formed on and extending outwardly from an outer circumference of each locking body 231.

The sliding plate 233 has one end connected to the locking body 231 and the other end connected to the release handle 234. It is positioned and oriented to permit longitudinal reciprocal movement within the short length defined by a guide recess 213b formed in a body of the sliding plate 233.

The release handle 234 is designed to cover an end part of the outer circumference of the first extension pipe 210, and reciprocal movement of the release handle 234 is restricted to longitudinal movement within the length defined by guide holes 235 formed in opposite sides of the release handle 234 and remaining in engagement with the guide protrusion 212.

The joint housing 240 is connected to the joint part 222 to seal the connection between the first and the second extension pipes 210, 220, respectively, and is connected to pivot in relation to the movement of the second extension pipe 220. Although not shown, the joint cover 240 may have locking holes formed at corresponding positions relative to the first and the second locking recesses 223 and 224 formed in the joint part 222, so that the resilient locking member 230 can be used in tandem therewith. In such a case, it is preferable that the locking recesses 223, 224 extend through the wall of the cylindrical joint 213.

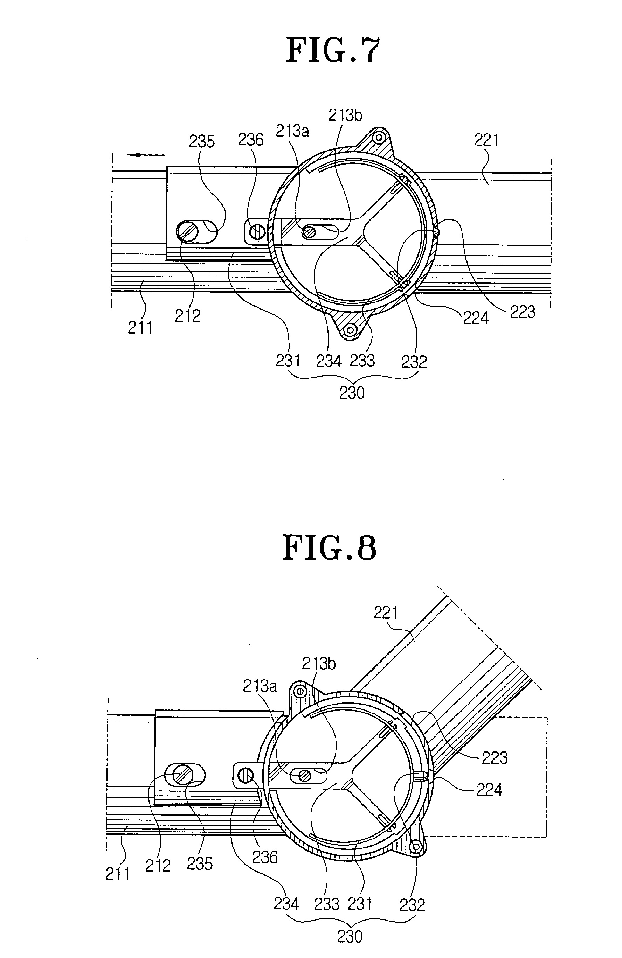

Hereinafter, the operation of the extension pipe arrangement for the vacuum cleaner according to the second embodiment of the present invention will be described with reference to FIGS. 7 and 8.

Since the locking and releasing operations are essentially similar to or the same as those of the first embodiment, only the distinguishing elements will be described for brevity. The operation handle 134 of the first embodiment finds a corresponding element in the release handle 234 of the second embodiment. Accordingly, when the release handle 234 is pulled out in the direction of the arrow shown in FIG. 7, it functions in the same manner as the operation handle 134 of the first embodiment, so that the locking protrusions 232 are withdrawn from the first locking recesses 223 and the first and the second extension pipe 210 and 220 are released from the locked condition. After the releasing operation, a user can freely bend the first and the second extension pipes 210 and 220 relative to each other, and it does not require a user's further manipulation of the release handle 234. The first and the second extension pipes 210 and 220 pivot and bend until the locking protrusions 232 are seated in and engage the second locking recesses 224. As in the first embodiment, the positions of the first and the second locking recesses 224 may have a predetermined angle of bend between the first and the second extension pipes 210 and 220 of approximately 45°, although a range of from about 40° to about 50° may be permitted. Also, according to the second embodiment, a pair of resilient locking members 230 may be provided on the opposite sides of the cylindrical joint 213, as shown. Therefore, if any one of them is locked, the first and the second extension pipes 210 and 220 can be fixed in the bent position. Alternatively, only a single resilient locking member may be provided, as in the first embodiment shown in FIGS. 1-4 above. In a preferred embodiment, the recesses 223 are 224 are formed to extend from the inner circumference to the outer circumference of the cylindrical joint 213 so as to extend through and penetrate the wall of the cylindrical joint 213, as shown in FIGS. 7 and 8.

As described above, since the extension pipe arrangements 100 and 200 according to the present invention can be bent by simply withdrawing the operation handle 134 or the release handle 234, the user is able to easily clean the spaces under a bed or sofa without requiring a user to bend his/her back or adopt a low posture, thereby increasing convenience to the user.

## Claims

1. An extension pipe arrangement for a vacuum cleaner for providing a sealed channel between a cleaner body and a suction brush, the extension pipe arrangement having a joint which permits extension pipes to bend relative to each other, the extension pipe arrangement comprising:
a first extension pipe;
a second extension pipe pivotably connected to the first extension pipe; and
a resilient locking member disposed adjacent the first extension pipe to selectively restrain pivotal movement of the first and the second extension pipes relative to each other,
wherein reciprocal movement of the resilient locking member permits release of the locking condition between the first and the second extension pipes so as to permit the extension pipes to pivot relative to each other.

2. The extension pipe arrangement as claimed in claim 1, wherein the first extension pipe further comprises:
a tubular body;
a cylindrical joint formed at one end of the body for providing a connection to the second extension pipe;
a locking receiver formed within the cylindrical joint to receive the resilient locking member; and
a locking recess formed on an outer circumference of the cylindrical joint for receiving a part of the resilient locking member when it is positioned for insertion into the locking recess.

3. The extension pipe arrangement as claimed in claim 2, wherein the second extension pipe comprises a joint part having a plurality of locking recesses with which the part of the resilient locking member may selectively engage, the joint part being connected to the joint housing to provide support at opposite sides of the cylindrical joint.

4. The extension pipe arrangement as claimed in claim 2 or 3, wherein the resilient locking member further comprises:
a locking member body shaped to correspond in form with the locking receiver and the part of the resilient locking member further comprising a locking protrusion formed on an outer circumference of the resilient locking member to permit selective insertion into and engagement with the plurality of locking recesses;
a sliding plate connected to the locking member body; and
an operation handle connected to the sliding plate.

5. The extension pipe arrangement as claimed in claim 4, when appendant to claim 3, wherein the joint part of the second extension pipe has at least one slot element allowing the operation handle to be exposed to the outside through a wall of the joint housing, while permitting reciprocating movement of the operation handle along the slot element.

6. The extension pipe arrangement as claimed in claim 5, wherein the slot element further comprises:
a first slot extending along a line parallel with the first extension pipe when the first and the second extension pipes are connected to each other in a straight line; and
a second slot extending along a line parallel with the first extension pipe when the first and the second extension pipes are in a bent relationship relative to each other.

7. The extension pipe arrangement as claimed in claim 3, or in any of claims 4 to 6 when appendant directly or indirectly to claim 3, wherein the locking recesses comprise:
a first locking recess for securing the first and the second extension pipes in a first position when the first and the second extension pipes are in the first position being connected in a straight line; and
a second locking recess for securing the first and the second extension pipes in a second position when the first and the second extension pipes in the second position are in a bent condition and having a predetermined angle therebetween.

8. The extension pipe arrangement as claimed in claim 7, wherein the first and the second locking recesses each has a chamfered surface adjacent an inner surface of the locking receiver facing the locking protrusion.

9. The extension pipe arrangement as claimed in any preceding claim, wherein the resilient locking member selectively restrains pivotal movement of the first and the second extension pipes relative to each other to a straight position and a bent angle position, the bent angle position producing an angle between the first and the second extension pipes that ranges essentially from 40° to 50°.

10. The extension pipe arrangement as claimed in claim 2, or in any of claims 3 to 9 when appendant directly or indirectly to claim 2, wherein the locking recess penetrates through a wall of the outer circumference of the cylindrical joint whereby extension of the locking protrusion into the locking recess causes the locking protrusion to extend through the wall.

11. An extension pipe arrangement for a vacuum cleaner for providing a sealed channel between a cleaner body and a suction brush, the extension pipe arrangement having a joint which permits extension pipes to bend relative to each other, the extension pipe arrangement comprising:
a first extension pipe;
a second extension pipe pivotably connected to the first extension pipe and having a plurality of locking recesses;
a release handle covering a portion of the outer circumference of the first extension pipe;
at least one resilient locking member having a locking protrusion extending therefrom for selectively engaging one of the plurality of locking recesses when the user effects a sliding movement of the release handle, the resilient locking member restraining pivotal movement of the first and the second extension pipes relative to each other when the locking protrusion is engaged within one of the locking recesses; and
a joint cover connected adjacent one side of the second extension pipe and pivoting together with the second extension pipe to seal a connection portion of the first and the second extension pipe, the joint cover having the plurality of locking recesses for receiving the locking protrusion.

12. The extension pipe arrangement as claimed in claim 10, wherein the first extension pipe comprises:
a tubular body having a slide retention protrusion;
a cylindrical joint formed at one end of the tubular body providing for connection to the second extension pipe, the cylindrical joint having two laterally disposed sides;
locking member receivers formed in both laterally disposed sides of the cylindrical joint, each being configured to receive a resilient locking member; and
a recess formed in an inner circumference of each of the locking member receivers, the locking protrusion being capable of being inserted into the recess when the first extension pipe is appropriately positioned relative to the second extension pipe.

13. The extension pipe arrangement as claimed in claim 11 or 12, wherein each of the resilient locking members comprise:
a locking member body disposed within the cylindrical joint, the locking protrusion protruding from an outer surface of the locking member body; and
a sliding plate having one end connected to the locking member body and the other end connected to the release handle for reciprocal movement depending on the position of the release handle.

14. The extension pipe arrangement as claimed in claim 11, 12, or 13 wherein a pair of resilient locking members are symmetrically disposed, one at each of the two sides of the cylindrical joint.

15. The extension pipe arrangement as claimed in any of claims 11 to 14, wherein the release handle includes a guide hole disposed to correspond to the position of the guide protrusion, and restraining the reciprocal movement of the release handle in a longitudinal direction along the first extension pipe.

16. The extension pipe arrangement as claimed in claim 12, or in any of claims 13 to 15 when appendant directly or indirectly to claim 12, wherein the locking recess penetrates through a wall of the outer circumference of the cylindrical joint whereby extension of the locking protrusion into the locking recess causes the locking protrusion to extend through the wall.
